# EUROPEAN PATENT SPECIFICATION

(11) **EP 2 997 765 B1**
(45) Date of publication and mention of the grant of the patent: **17.07.2019**
(21) Application number: 14815895.9
(22) Date of filing: 09.12.2014
(51) Int. Cl.: H04W 36/00

(54) **REDUCED WIRELESS COMMUNICATION HANDOVER COMMAND SIZE DURING HANDOVER EXECUTION**
REDUZIERTE DRAHTLOSKOMMUNIKATIONSÜBERGABEBEFEHLSGRÖSSE WÄHREND DER DURCHFÜHRUNG EINER ÜBERGABE
TAILLE RÉDUITE D'INSTRUCTION DE TRANSFERT INTERCELLULAIRE DE COMMUNICATION SANS FIL DURANT L'EXÉCUTION D'UN TRANSFERT INTERCELLULAIRE

(30) Priority: 18.12.2013 US 201314132899
(43) Date of publication of application: 23.03.2016
(73) Proprietor: Telefonaktiebolaget LM Ericsson (publ), 164 83 Stockholm (SE)
(72) Inventor: LAI, Xiaoming, Ottawa, Ontario K2G 5S3 (CA); GEORGE, Mercy, Kanata, Ontario K2T 0E8 (CA); NICOLETTA, Johanna, Ottawa, Ontario K2G 2T8 (CA)
(74) Representative: Zacco Sweden AB
(86) International application number: PCT/IB2014/066733
(87) International publication number: WO 2015/092616

(56) References cited:
- EP-A2- 0 589 552
- US-A1- 2011 310 845
- US-A1- 2012 254 706
- US-A1- 2012 287 902
- MARTIN LEFKOWITZ-TRAPEZE NETWORKS ET AL: "Proposed draft text for the site reporting mechanism for TGk", INTERNET CITATION, 13 March 2003 (2003-03-13), XP002299876, Retrieved from the Internet: URL:http://www.grouper.ieee.org/groups/802 /11/Documents/D3T151-200.html [retrieved on 2004-10-08]

## Description

### TECHNICAL FIELD

The present invention relates to wireless network communications mobility management, and in particular to a modified wireless communication network handover procedure for user equipment.

### BACKGROUND

Mobility management of user equipments (UEs) in wireless communication networks remains a problematic issue. In particular, handover efficiency is a priority in mobility management. Handover generally occurs in a location where the radio frequency channel condition is getting worse in the source cell and is improving in the target cell. In order to maintain running applications without interruption, e.g., a call, data streaming, etc., a successful handover is required from the source cell to the target cell. Time is a key factor for successful handover. The less time that is required for handover, the higher the handover success rate.

Handover involves signaling between the UE, source eNodeB (eNB) and target eNB in which the Handover Command (RRC Connection Reconfiguration) message is sent to the UE during the handover execution phase. The Handover Command contains configuration information the UE needs to access the target eNB. However, if the Handover Command message contains a large amount of UE configuration information, the Handover Command message will likely take a longer time to be delivered to the UE, thereby reducing the chance for the UE to receive the message as the radio channel condition to the source eNB is degrading.

Techniques relating to handover in wireless communication networks have been described in US 2011/0310845 A, which relates to a radio (wireless) communication system providing a radio communication service and the terminal, and more particularly, to a method of handling an uplink synchronization timer during a handover procedure in an Evolved Universal Mobile Telecommunications System (E-UMTS) evolved from the Universal Mobile Telecommunications System (UMTS) or a Long Term Evolution (LTE) system, EP 0589552 A, which relates to the field of wireless local area networks (LANs) and, more particularly, to a method and
apparatus for maintaining connectivity of nodes in a wireless LAN, US 2012/0287902 A, which relates to a first method (and related first apparatus) includes transmitting, in a handover request message, an indication of a first protocol version; a second method (and related second apparatus) includes receiving, in the handover request message, the indication, deciding, based on the received indication and a second protocol version, on a value of an information element included in a handover request acknowledgement message to be transmitted, the information element indicating usage of a first or second signaling schemes, and transmitting the handover request acknowledgement message including the information element; and in the first method receiving the handover request acknowledgement message including the information element; and a third method (and related third apparatus) including receiving the handover command message including the information element, and configuring according to one of the first and second signaling schemes indicated by the information element, as well as by M. Lefkowitz et al.: "Proposed draft text for the site reporting mechanism for TGk", Internet citation, 2003, which relates to a site reporting mechanism for TGk.

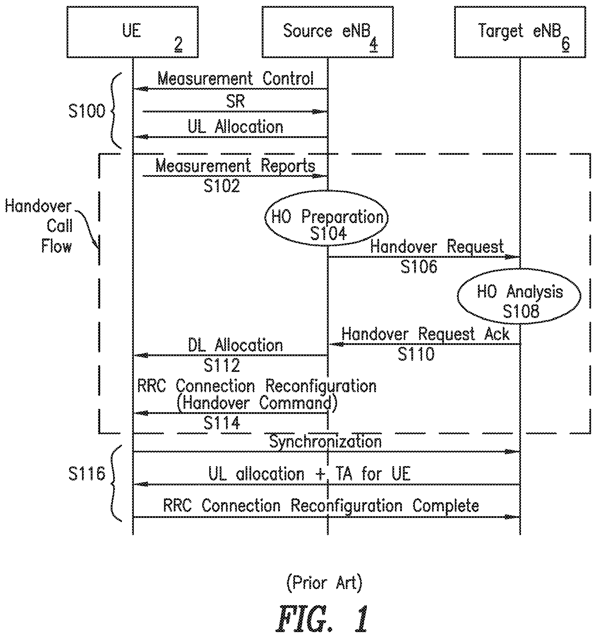

One such existing handover procedure is described with reference to FIG. 1. Measurement control, scheduling request and uplink (UL) allocation signaling occurs between UE 2 and source eNodeB 4 (eNB 4), as are known in the art (Block S100). The handover call flow begins when UE 2 triggers transmission of Measurement Reports that indicate handover is required (Block S102). The triggering criteria are based on predefined rules as is well known in the art. Source eNB 4 enters the handover preparation phase by determining, based on the Measurement

Reports that indicate handover is required (Block S102). The triggering criteria are based on predefined rules as is well known in the art. Source eNB 4 enters the handover preparation phase by determining, based on the Measurement Reports, to hand off UE 2 (Block S104). Source eNB 4 transmits a handover request message to target eNB 6 to pass information to prepare the handover at the target side (Block S106). Target eNB 6 performs handover analysis to determine whether to accept UE 2 and to configure the required resources if accepted (Block S108).

Target eNB 6 transmits a Handover Request Acknowledgement message to source eNB 4 that includes configuration information to be sent to UE 2 as part of the Handover Command (Block S110). Source eNB 4 performs downlink allocation signaling and sends at the beginning of the handover execution phase, sends the Handover Command, i.e., RRC Connection Reconfiguration, message to UE 2 with the configuration information UE 2 needs to access target eNB 6 (Blocks S112-S114). The remainder of the handover execution phase includes: UE synchronization with target eNB 6; uplink allocation and timing advance; and UE 2 sending an RRC Connection Reconfiguration Complete message to target eNB 6 to indicate the handover procedure is completed for UE 2 (Block S116).

However, by the time the Handover Command message is send to UE 2, the already degraded radio condition that triggered the Measurement Reports (Block S102) would likely have gotten degraded even more as UE 2 continues to move away from source eNB 4. Transmitting all UE 2 configuration information at the end of the Handover call flow via a Handover Command reduces the chance of UE 2 even receiving the Handover Command. Failure to receive the Handover Command results in handover failure and call drop.

### SUMMARY

The present invention is defined according to the claims.

According to one embodiment, a source node for communication with a user equipment, UE, according to claim 1 is provided. The source node includes at least one processor configured to cause transmission of a first handover command message to the UE. The first handover command message includes first configuration information for handover to a target node. At least one receiver is configured to receive second configuration information from the target node after
transmission of the first handover command message to the UE. The at least one processor is further configured to cause transmission of a second handover command message to the UE. The second handover command message includes the second configuration information received from the target node. The first configuration information is configured to be used in combination with the second configuration information to allow the UE to access the target node for handover.

In accordance with another aspect of this embodiment, the at least one receiver is further configured to receive a measurement report associated with the UE, the measurement report indicating the target node for handover. The processor is further configured to cause transmission of a handover preparation request message to the target node. The handover preparation request message requests the second configuration information from the target node. The at least one receiver is further configured to receive neighbor configuration information from the target node before the transmission of the first handover command message to the UE and the processor is further configured to determine at least one difference in configuration between the source node and the target node based at least in part on the received neighbor configuration information. The memory is further configured to store a Neighbor Relations Table, NRT. The NRT is configured to store the determined at least one difference. The first configuration information is based at least in part on the determined at least one difference stored in the NRT.

In accordance with another aspect of this embodiment, the at least one receiver is further configured to receive neighbor configuration information from the target node before the transmission of the first handover command message to the UE. the processor is further configured to determine the full configuration information of the target node based at least in part on the received neighbor configuration information. The memory is further configured to store a Neighbor Relations Table, NRT. The NRT is configured to store the determined full configuration information of the target node. The first configuration information is based at least in part on the full configuration information of the target node.

The first handover command message is a Radio Resource Control, RRC, Connection Reconfiguration message and the second handover command message is a RRC Connection Reconfiguration message. The first configuration information is determined before a handover request acknowledgement message is received from the target node. The first configuration information includes a first quantity of handover related parameters and the second configuration information includes a second quantity of handover related parameters. The first quantity of handover related parameters is greater than the second quantity of handover related parameters. A data size of the first configuration information is larger than a data size of the second configuration information. A radio channel quality between the UE and source node is better during transmission of the first handover command message than during transmission of the second handover command message.

According to another embodiment, a method according to claim 3 is provided. A first handover command message is caused to be transmitted to a user equipment, UE. The first handover command message includes first configuration information for handover to a target node. Second configuration information is received from the target node after transmission of the first handover command message to the UE. A second handover command message is caused to be transmitted to the UE. The second handover command message includes at least the second configuration information received from the target node. The first configuration information is configured to be used in combination with the second configuration information to allow the UE to access the target node for handover.

In one or more aspects of this embodiment, a measurement report associated with the UE is received. The measurement report indicates the target node for handover. A handover preparation request message is caused to be transmitted to the target node. The handover preparation request message requesting the second configuration information from the target node. Neighbor configuration information is received from the target node before the transmission of the first handover command message to the UE. At least one difference in configuration between the source node and the target node is determined based at least in part on the received neighbor configuration information. A Neighbor Relations Table, NRT, is stored. The NRT is configured to store the determined at least one difference. The first configuration information is based at least in part on the determined at least one difference stored in the NRT.

Neighbor configuration information is received from the target node before the transmission of the first handover command message to the UE. The full configuration information of the target node is determined based at least in part on the received neighbor configuration information. A Neighbor Relations Table, NRT, is stored. The NRT is configured to store the determined full configuration information of the target node. The first configuration information is based at least in part on the full configuration information of the target node. The first handover command message is a Radio Resource Control, RRC, Connection Reconfiguration message. The second handover command message is a RRC Connection Reconfiguration message. The first configuration information is determined before a handover request acknowledgement message is received from the target node.

According to another embodiment, a source node for communication with a user equipment, UE, is provided. At least one receiver is configured to receive a measurement report associated with the UE. The measurement report indicates a target node for handover. At least one processor is configured to cause transmission of a first Radio Resource Control, RRC, connection reconfiguration message to the UE. The first RRC connection reconfiguration message includes first configuration information. The at least one processor is further configured to cause transmission of a handover preparation request message to the target node. The handover preparation request message requests second configuration information from the target node. The at least one receiver is further configured to receive a handover request acknowledgement message from the target node after transmission of the first RRC connection reconfiguration message to the UE. The at least one processor is further configured to cause transmission of a second RRC Connection Reconfiguration message to the UE. The second RRC Connection Reconfiguration message includes the second configuration information received from the target node. The first configuration information is configured to be used in combination with the second configuration information to allow the UE to access the target node.

According to one or more aspects of this embodiment, the at least one receiver is further configured to receive neighbor configuration information from the target node before the transmission of the first handover command message to the UE. The processor is further configured to determine at least one difference in configuration between the source node and the target node based at least in part on the received neighbor configuration information. The memory is further configured to store a Neighbor Relations Table, NRT. The NRT is configured to store the determined at least one difference. The first configuration information is based at least in part on the determined at least one difference stored in the NRT. The at least one receiver is further configured to receive neighbor configuration information from the target node before the transmission of the first handover command message to the UE. The processor is further configured to determine the full configuration information of the target node based at least in part on the received neighbor configuration information. The memory is further configured to store a Neighbor Relations Table, NRT. The NRT is configured to store the determined full configuration information of the target node.

The first configuration information is based at least in part on the full configuration information of the target node. The first RRC Connection Reconfiguration message is sent during a handover preparation phase. The second RRC Connection Reconfiguration message is sent during a handover execution phase. The first configuration information includes at least one Radio Resource Configuration Common parameter. The second configuration information includes at least one Radio Resource Configuration dedicated parameter.

### BRIEF DESCRIPTION OF THE DRAWINGS

FIG. 1 is a signaling flow diagram of an existing handover procedure;
FIG. 2 is a block diagram of a communication system having modified handover call flow in accordance with the principles of the present invention;
FIG. 3 is a signaling flow diagram of a handover procedure with modified handover call flow in accordance with the principles of the present invention;
FIG. 4 is a block diagram of communications between nodes in the communication system in accordance with the principles of the present invention;
FIG. 5 is a flowchart of an exemplary handover process in accordance with the principles of the present invention;
FIG. 6 is a flowchart of an exemplary target handover process in accordance with the principles of the present invention;
FIG. 7 is a flowchart of an exemplary table process in accordance with the principles of the present invention; and
FIG. 8 is a flowchart of an alternative table process in accordance with the principles of the present invention.

### DETAILED DESCRIPTION

The present invention advantageously provides nodes and methods for handover call flow. Accordingly, the node, system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description.

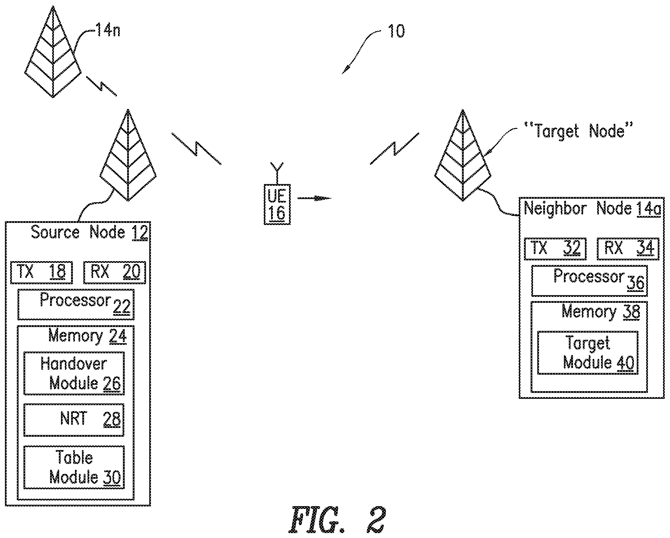

Referring now to drawing figures in which like reference designators refer to like elements there is shown in FIG. 2 an exemplary communication system having modified handover call flow constructed in accordance with the principles of the present invention and designated generally as "10." System 10 includes source node 12, one or more neighbor nodes 14a-14b (collectively referred to as "neighbor node 14") and one or more user equipments 16 (collectively referred to as "UE 16"). In one embodiment, neighbor node 14a is referred to as target node 14a as UE 16 is being handed off from source node 12 to neighbor node 14. System 10 may support one or more communication protocols known in the art such as Internet Protocols along with Long Term Evolution (LTE) standards. Source node 12 and neighbor node 14 may communicate with each other via a backhaul network (not shown) that provides communications to/from nodes 12 and 14.

Source node 12 may include one or more transmitters 18 (collectively referred to as "transmitter 18") and one or more receivers 20 (collectively referred to as "receiver 20") for communicating with nodes 14 and UEs 16. Source node 12 includes one or more processors 22 for performing source node 12 functions as described herein. Nodes 12 and 14 may be base stations such as an LTE eNodeBs. Source node 12 further includes memory 24 that stores handover module 26, Neighbor Relations Table (NRT) 28 and table module 30, among other modules and data. In particular, memory 24 may include non-volatile and volatile memory. For example, non-volatile memory may include a hard drive, flash memory, memory stick and the like. Also, volatile memory may include random access memory and others known in the art.

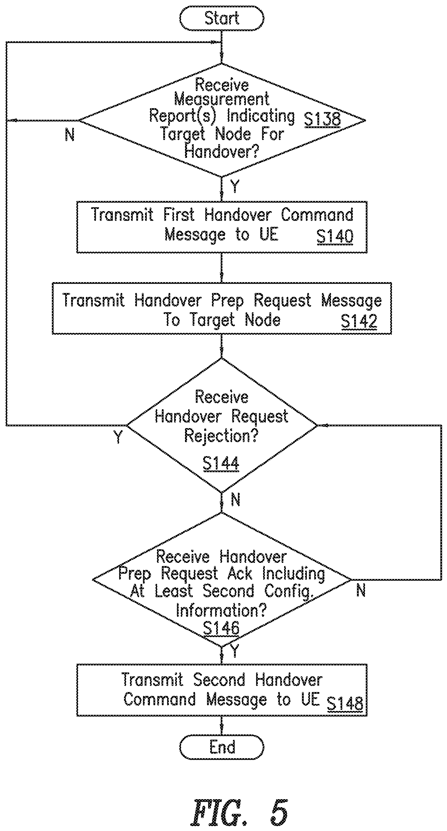

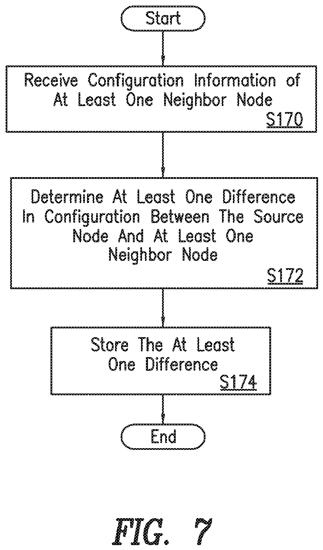

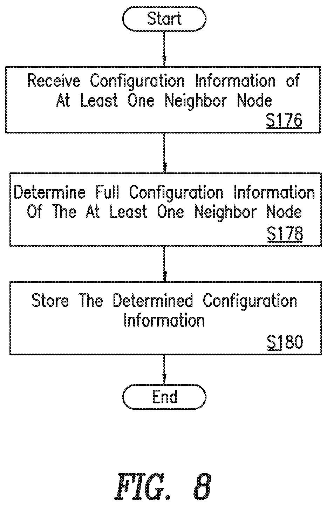

Memory 24 may store program instructions such as those for handover module 26 and table module 30. For example, handover module 26 includes instructions, which when executed by processor 22, causes processor 22 to perform the handover process, discussed in detail with respect to FIG. 5. In another example, table module 30 includes instructions, which when executed by processor 22, causes processor 22 to perform the table process, discussed in detail with respect to FIGS. 7 and 8. Handover module 26 and table module 30 may also be implemented in hardware such as through application specific integrated circuits (ASICs).

NRT 28 is configured to store configuration information of neighbor nodes 14 in NRT 28 in preparation for future handovers. In particular, source node 12 maintains NRT 28 using an Automatic Neighbor Relations (ANR) function. The ANR function is well known in the art. In one embodiment, at least one difference in configuration between source node 12 and neighbor nodes 14 is identified and saved in NRT 28 by source node 12. In another embodiment, source node 12 stores full configuration information of neighbor node 14.

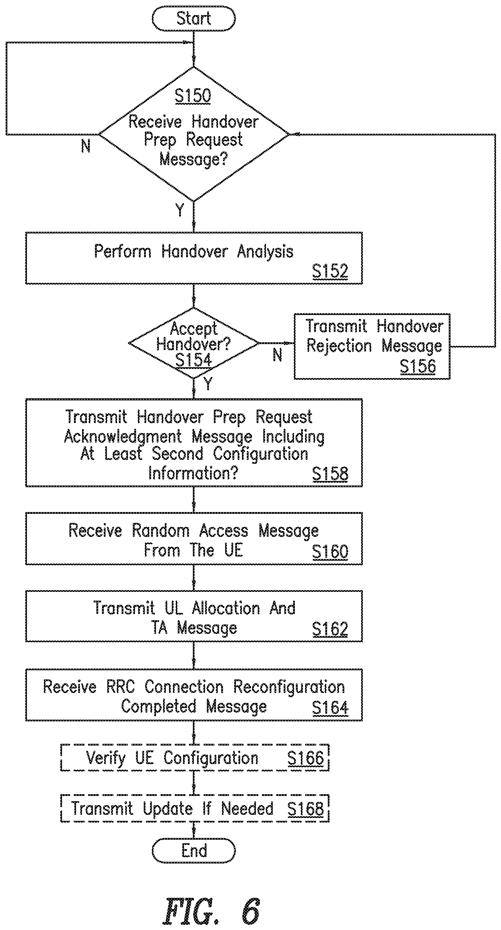

Neighbor node 14 includes one or more transmitters 32 (collectively referred to as "transmitter 32"), one or more receivers 34 (collectively referred to as "receiver 34") for communicating with node 12 and/or UE 16. Node 14 further includes memory 38 and one or more processors 36 (collectively referred to as "processor 36") that generally correspond to memory 24 and processor 22, with size and performance being adjusted based on design needs, while providing neighbor node 14 functionality described herein. For example, memory 24 stores target module 40 in which target module includes instructions, which when executed by processor 36, causes processor 36 to perform the target handover process discussed in detail with respect to FIG. 6. Target module 40 can also be implemented in hardware such as through application specific integrated circuits (ASICs).

UE 16 may include one or more transmitters and one or more receivers for communicating at least with nodes 12 and 14. For example, UE 16 may use communication protocols known in the art such as Internet Protocols along with LTE air interface protocols. UE 16 may include a memory and one or more processors that generally correspond to memory 24 and processor 22, with size and performance being adjusted based on design needs, while providing general UE 16 functionality as is well known in the art.

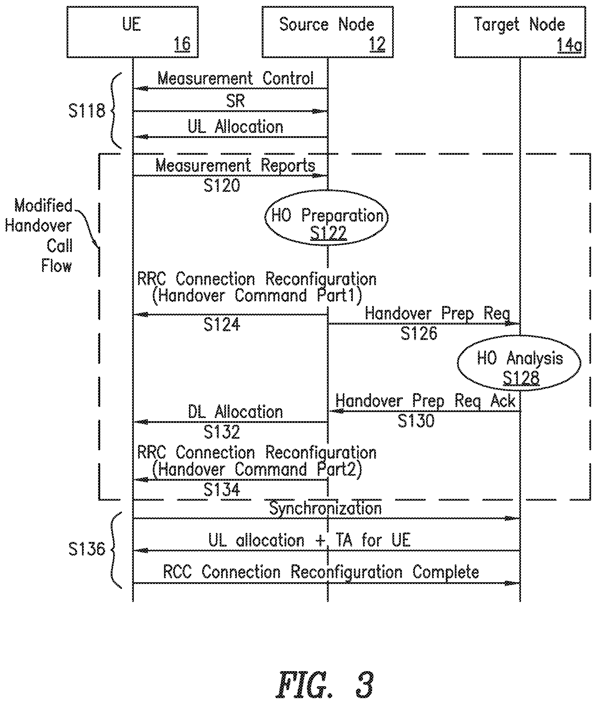

An exemplary signaling flow diagram of system 10 to perform the handover process with modified handover call flow is illustrated in FIG. 3. The signaling of Blocks S118 and S120 corresponds to Blocks S100 and S102 of FIG. 1. Source node 12 enters the handover preparation phase by determining to hand off the UE based at least in part on measurement report(s) (Block S122). The measurement report is a report triggered by UE 16 based on predefined rules that are configured by source eNB according to system information, specification, area restriction, among other factors, as is well known in the art. The measurement report is associated with the UE in which the measurement report indicates the target node for handover.

Source node 12 transmits a first handover command message including first configuration information to UE 16 (S124). The first handover command message is a first RRC Connection Reconfiguration message that forms a first part of a Handover Command. For example, the first configuration information may include at least a first set of information elements (IEs) for UE handover configuration that were determined by source node 12 based at least in part on information stored in NRT 28. Information Elements (IEs) are signaling parameters included in RRC messages. The first handover command message including first configuration information is sent to UE 16 during the handover preparation phase while the degrading channel quality from source 12 to UE 16 is degrading but still acceptable, thereby advantageously increasing the chances of decoding the first handover command message. In other words, the first handover command message includes IEs for UE 16 handover already known by source node 12 that are sent to UE 16 in the handover preparation phase, i.e., before the Handover Preparation Request message. Further, the first configuration information is determined before a handover request acknowledgement message is received from the target node. In one embodiment, the first configuration information includes common configuration parameters discussed below.

Source node 12 transmits a Handover Preparation Request message to target node 14a (Block S126). The Handover Preparation Request message includes configuration information or IEs that source node 12 needs to obtain from target node 14a for UE handover configuration, i.e., the handover preparation request message requests the second configuration information from target node 14a. An example Handover Preparation Request message in accordance with the instant invention is illustrated below. Because source node 12 is requesting IEs that are not already known to source node 12, the Handover Preparation Request message will contain less IEs and be smaller than the standard Handover Request Message of Block S106. While different configurations of eNBs may require different size messages, i.e., include different signaling parameters, the instant invention is advantageously able to omit one or more signaling parameters from the Handover Preparation Request message than would otherwise have been sent, thereby reducing processing time and required transmission resources.

Target node 14a performs handover analysis to determine whether to accept the handover and reserve resources if accepted, as is well known in the art (Block S128). Target node 14a transmits a Handover Preparation Acknowledgement message to source node 12 if the handover is accepted by target node 14a (Block S130). The Handover Preparation Acknowledgement message includes the remaining IEs or configuration needed for UE handover such as radio Resource Configuration dedicated parameters or UE specific parameters, i.e., at least one receiver 20 receives second configuration information from the target node after transmission of the first handover command message to the UE. Since the Handover Preparation Acknowledgment message contains a reduced number of IEs compared to the Handover Request Acknowledgment message of FIG. 1, the processing time of on the target node 14a to send the Handover Preparation Acknowledgement message is reduced, thereby reducing the overall time it takes for UE 16 to receive both handover command messages, i.e., the first handover command message and second handover command message. In other words, the second handover command message includes IEs for UE 16 handover that are required for target node 14a to send to source node 12.

Source node 12 performs downlink allocation to prepare UE 16 to receive the second handover command message (Block S132). Source node 12 transmits a second handover command message to UE 16 (Blocks 134). The second handover command message is a second RRC Connection Reconfiguration message. The second handover command message includes at least the remaining IEs needed for UE 16 configuration such as radio Resource Configuration dedicated parameters or UE specific parameters, i.e., the second handover command message includes the second configuration information received from the target node. Since UE 16 would likely have received most of the IEs needed for UE 16 configuration in the first handover command message, the size of the second handover command message including the remaining IEs is smaller than the first handover command message, i.e., the second handover command message may include less signaling parameters than the first handover message.

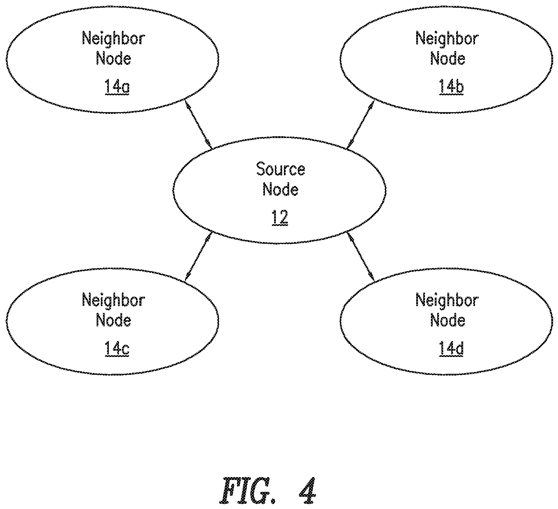

The first configuration information is configured to be used by UE 16 in combination with the second configuration information to allow UE 16 to access target node 14a for handover. Further, the second handover command message will be smaller than the Handover Command message of FIG. 1 that contains all the IEs needed for UE configuration. Further, the first configuration information includes a first quantity of handover related parameters and the second configuration information includes a second quantity of handover related parameters. The first quantity of handover related parameters are greater than the second quantity of handover related parameters. The types of handover related parameters are described in detail with respect to FIG. 4. Also, a data size of the first configuration information is larger than a data size of the second configuration information.

UE 16 will start to access target node 14a (Block S136) only when both first and second handover command messages are received. When UE 16 accesses target node 14a and gets the access response, UE 16 sends a completed configuration message to the target node 14a. In one embodiment, the completed configuration message may include full UE configuration information attached. When target node 14a gets the completed configuration message with attached full UE configuration information, target node 14a can verify UE 16 configuration and reconfigure UE 16 configuration if a different configuration is required by target node 14a. Since UE 16 will already be in the target cell of target node 14a, the radio condition will be gradually getting better; therefore, a large sized message to/from UE 16 is less of an issue than when the radio condition was gradually degrading before and during handover. In another embodiment, full UE configuration information is not attached to the completed configuration message.

By delivering the Handover Command message to UE 16 in two parts, i.e., first and second command messages, the first part of the Handover Command is usually delivered when the radio condition is degrading but still acceptable, i.e., a radio channel quality between UE 16 and source node 12 is better during transmission of the first handover command message than during transmission of the second handover command message. Thus, the likelihood of decoding the first handover command message is greater than UE 16 trying to decode the single larger Handover Command message of Block S114 in FIG. 1. Further, when sending the second handover command message, the size of the second handover command message is substantially less than the single Handover Command message of Block S114 in FIG. 1 as less signaling parameters need to be conveyed. Reducing the size of the second Handover Command message compared to the Handover Command message of Block S114 allows less radio resources to be used. While different eNB configurations may require different size messages, i.e., more/less signaling parameters, the instant invention allows at least one signaling parameter to be omitted from the second handover command message that would otherwise have been transmitted in the single Handover Command message of Block S1 14. In one embodiment, the message size of the second handover command message is more than 50% smaller than the single Handover Command message of Block S114.

In another embodiment, the same or substantially similar radio resources may be used when sending the second Handover Command message (Block S134) as is used for sending Handover Command message (Block S114) but a more reliable modulation and coding scheme (MCS) can be used for the second Handover Command message, i.e., the resources not needed to transfer the reduced amount of configuration information in the second Handover Command message can be used to provide a more robust MCS such as by increasing the cording rate. A more reliable or robust MCS increases the rate of successful delivery of the second Handover Command message, thereby reducing the risk of handover failure and call drop.

Further, the size of the Handover Preparation Request message from source node 12 to target node 14a is reduced compared to the Handover Request message of Block S106 in FIG. 1, due to the reduced number of IEs that need to be sent to source node 12. Therefore, the Handover Preparation Request message will take less time for target node 14a to perform handover analysis. Reducing the amount of time target node 14a needs to make a decision whether to accept UE 16 handover reduces the overall handover period in which the smaller the handover period the greater the likelihood of a successfully handover. Also, reducing the overall handover time reduces the handover interruption time.

In one embodiment, the delta configuration and/or full configuration concepts can be used in source node 12 to send the Handover Commands. Delta configuration indicates only changes to be made to the current UE configuration, thereby typically requiring less configuration information to be transmitted. Full configuration information indicates UE parameters that need to be changed and UE parameters that do not need to be changed, i.e., part of the UE 16's current configuration may not require change or modification but is included in the full configuration. While there are more elements in full configuration, full configuration can be used to transmit the first handover command message since the degrading radio condition should still be acceptable. In accordance with one embodiment, full configuration is implemented by target node 14a when incoming UE 16 has a configuration of higher release than target node 14a can handle. In order to implement delta reconfiguration, target node 14a has to be able to decode and analyze the current UE configuration, which is received in the handover preparation information signaling. Source node 12 may choose delta or full configuration to minimize the size of the Handover Commands.

FIG. 4 illustrates exemplary communications between source node 12 and neighbor nodes 14 that allows source node 12 to maintain NRT 28, as discussed above. An exemplary NRT 28 of source node 12 is below in Table 1 that includes configuration information, Reference Signal Received Power (RSRP) and Reference Signal Received Quality (RSRQ). While not illustrated herein for clarity reasons, neighbor node 14 also include NRT 28 such that neighbor node 14 can perform the functionality of source node 12 when UE 16 is being handed off by previous target node 14a to a new target node.

**Table 1 - Neighbor Relations Table**

| | Configuration | RSRP/RSRQ |
|---|---|---|
| Node 14a | | |
| Node 14b | | |
| Node 14c | | |
| Node 14d | | |

An exemplary handover process is described with reference to FIG. 5. Processor 22 determines if measurement report(s) indicating target node 14a for handover have been received (Block S138). For example, processor 22 determines target node 14 has been selected based on the received measurement report(s) from UE 16. If the measurement report has not been received, processor 22 performs the determination of block S138. If processor determines a measurement report has been received that indicates a target node 14, i.e., UE 16 has selected target node 14a, processor 22 performs a handover decision whether to hand off UE 16 in which processor 22 initiates the handover preparation phase if source node 12 determines to hand off UE 16. During the handover preparation phase, processor 22 causes transmission of a first handover command message to UE 16. The first handover command message is an RRC Connection Reconfiguration message (Handover Command Part 1) that includes first configuration information for UE 16 handover (Block S140). The first configuration information is based at least in part on configuration information stored in NRT 28. The first configuration information may include at least radio Resource Configuration parameters such as radio access configuration parameters, physical downlink shared channel configuration common parameters, physical uplink shared channel configuration common parameters, physical uplink control channel configuration common parameters, sounding reference uplink configuration common parameters, uplink power control configuration common parameters and antenna information configuration common parameters, among other parameters.

Processor 22 causes transmission of a Handover Preparation Request message to target node 14a (Block S142). In one embodiment, the first handover command message may be transmitted simultaneously or after the Handover Preparation Request but within the handover preparation phase. The first handover command message is transmitted before the Handover Preparation Acknowledgement message is received. Processor 22 determines whether a Handover Request Rejection message has been received from target node 14a (Block S144). The Handover Request Rejection message indicates target node 14a did not accept the hand off of UE 16. If processor 22 determines a Handover Request Rejection message has been received, processor 22 returns to Block S138. If processor 22 determines a Handover Request Rejection message has not been received, Processor 22 determines whether a Handover Preparation Acknowledgement message has been received (Block S146). If processor 22 determines a Handover Preparation Acknowledgement message has not been received, processor 22 performs the determination of Block S144.

However, if processor 22 determines a Handover Preparation Acknowledgement message has been received, processor 22 causes transmission of the second handover command message to UE 16 (Block S148). The second handover command message includes second configuration information required for UE 16 for handover. The second configuration information may include configuration information received in the Handover Preparation Request Acknowledgement message such as the remaining IEs needed for UE handover configuration.

One example of an RRC Connection Reconfiguration message (Handover Command) in a delta configured system is shown below. The configuration information in bold-italics indicates configuration information that could be sent in the first handover command message of the instant invention while the other elements could be sent in the second handover command message. In other words, configuration information of the Handover Command (Blocks S114) is transmitted to UE 16 at different times during modified Handover Command Call flow via first and second Handover command message (Blocks S124 and S134).

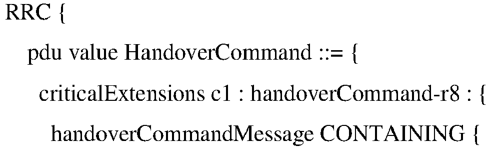

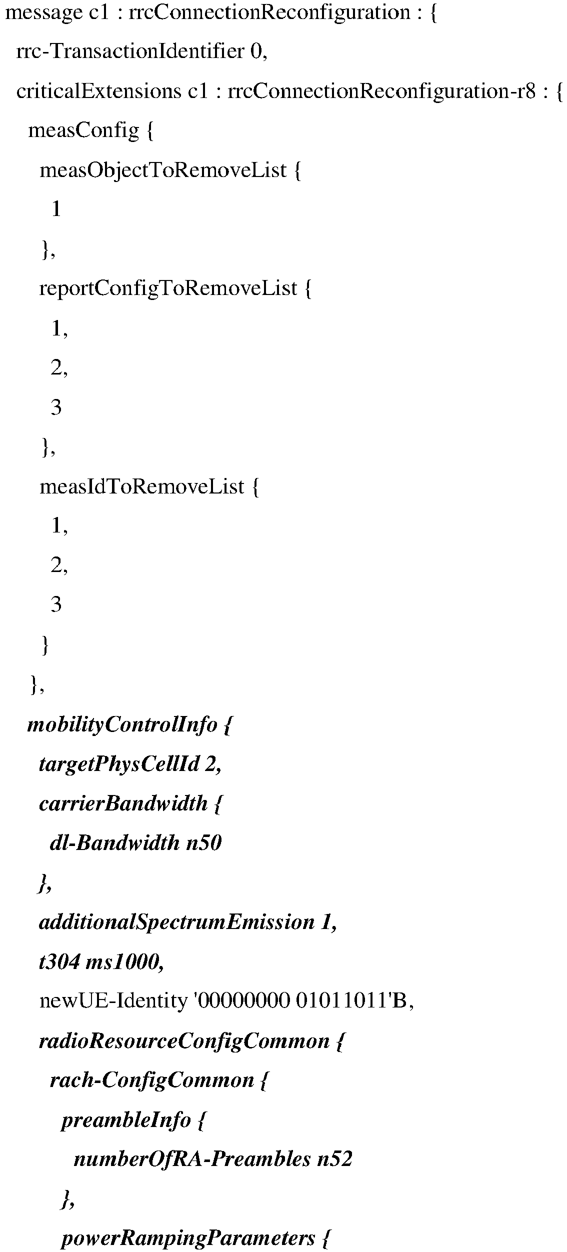

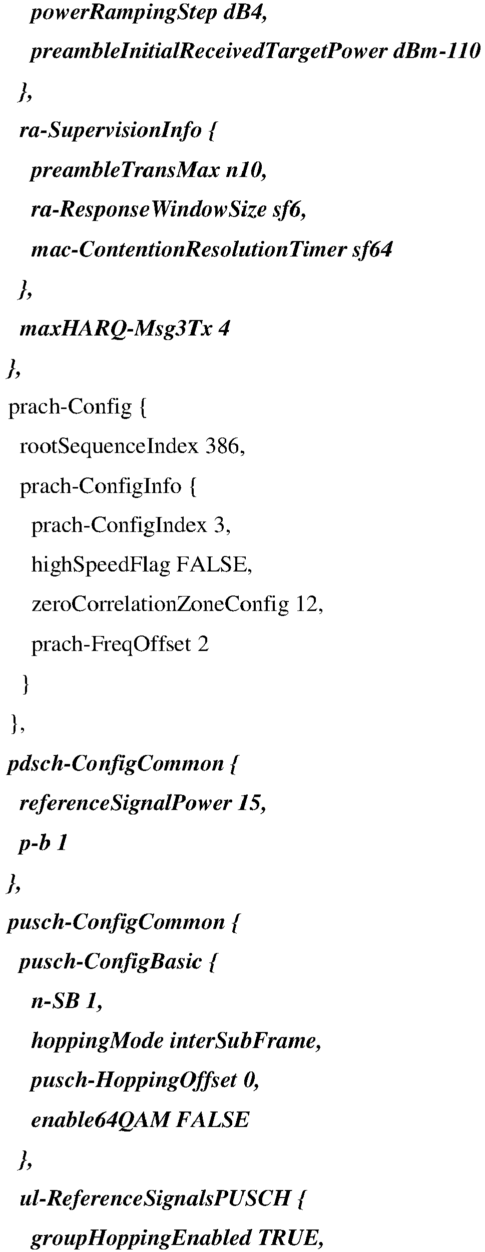

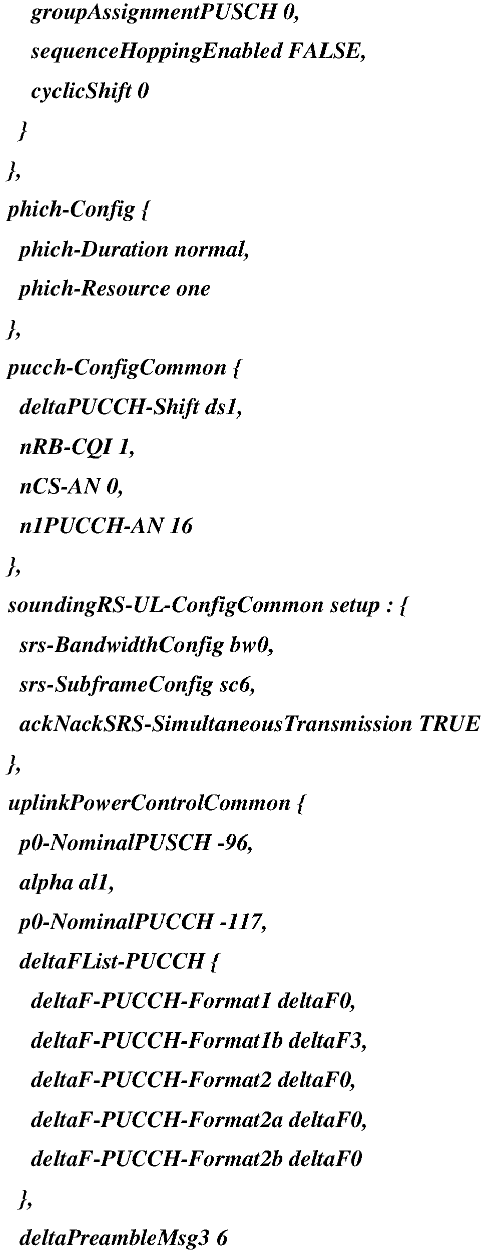

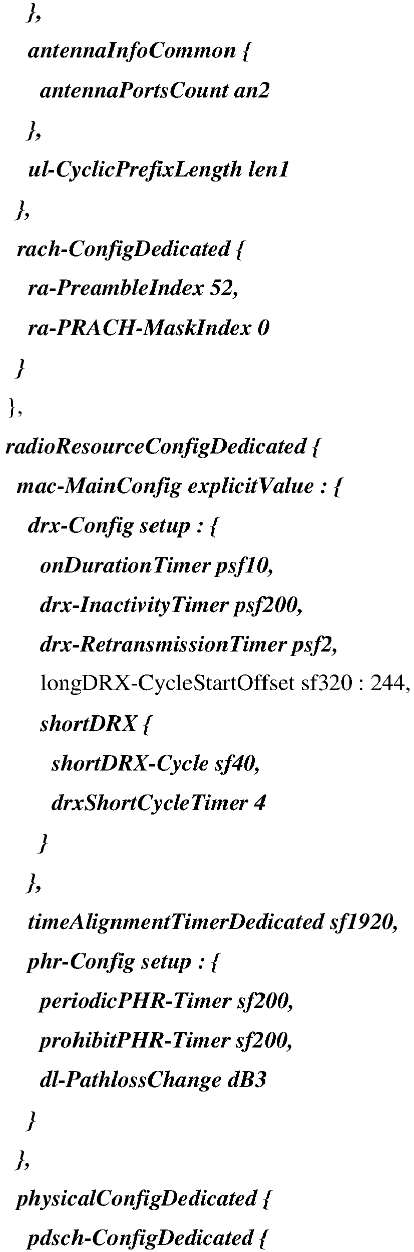

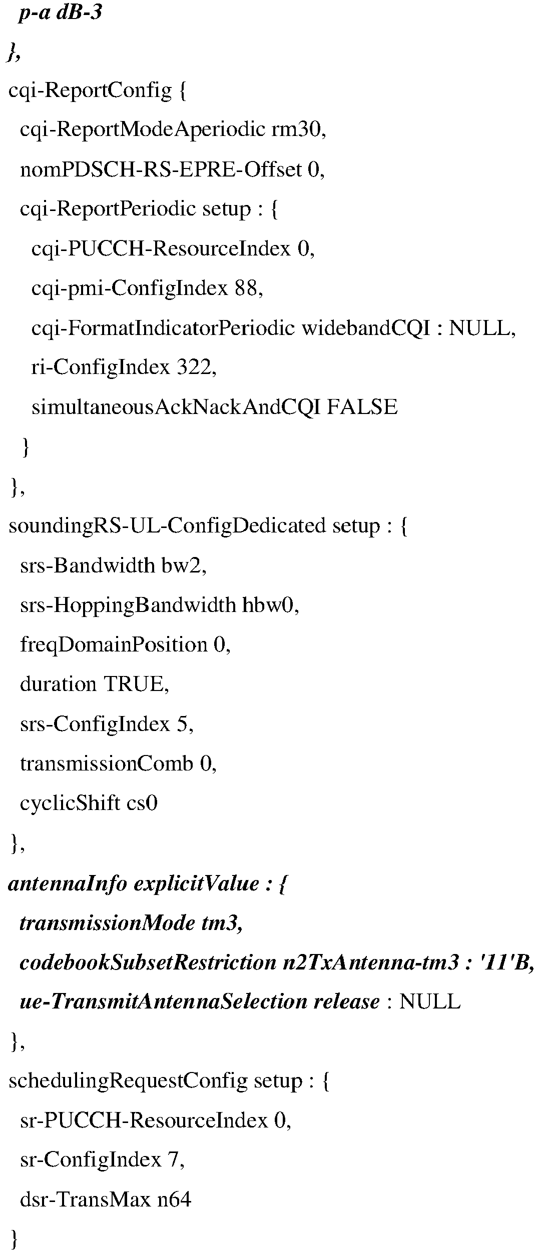

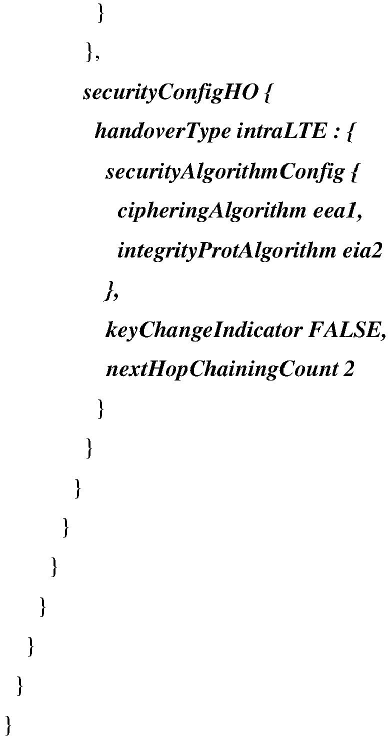

An example of the Handover Preparation Request message is illustrated below. The configuration information in bold-italics indicates configuration information that can be omitted from the Handover Preparation Request message, i.e., the Handover Preparation Request message may omit common configuration information as this information is already known to source node 12, i.e., source node 12 does not need to request common configuration information. The common configuration information may have already been sent to UE 16 via the first handover command message (Handover Command Part 1).

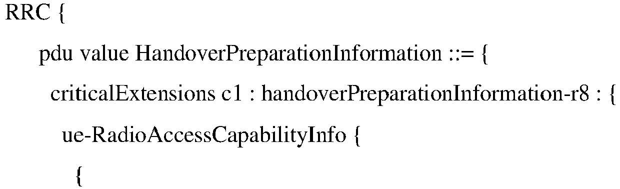

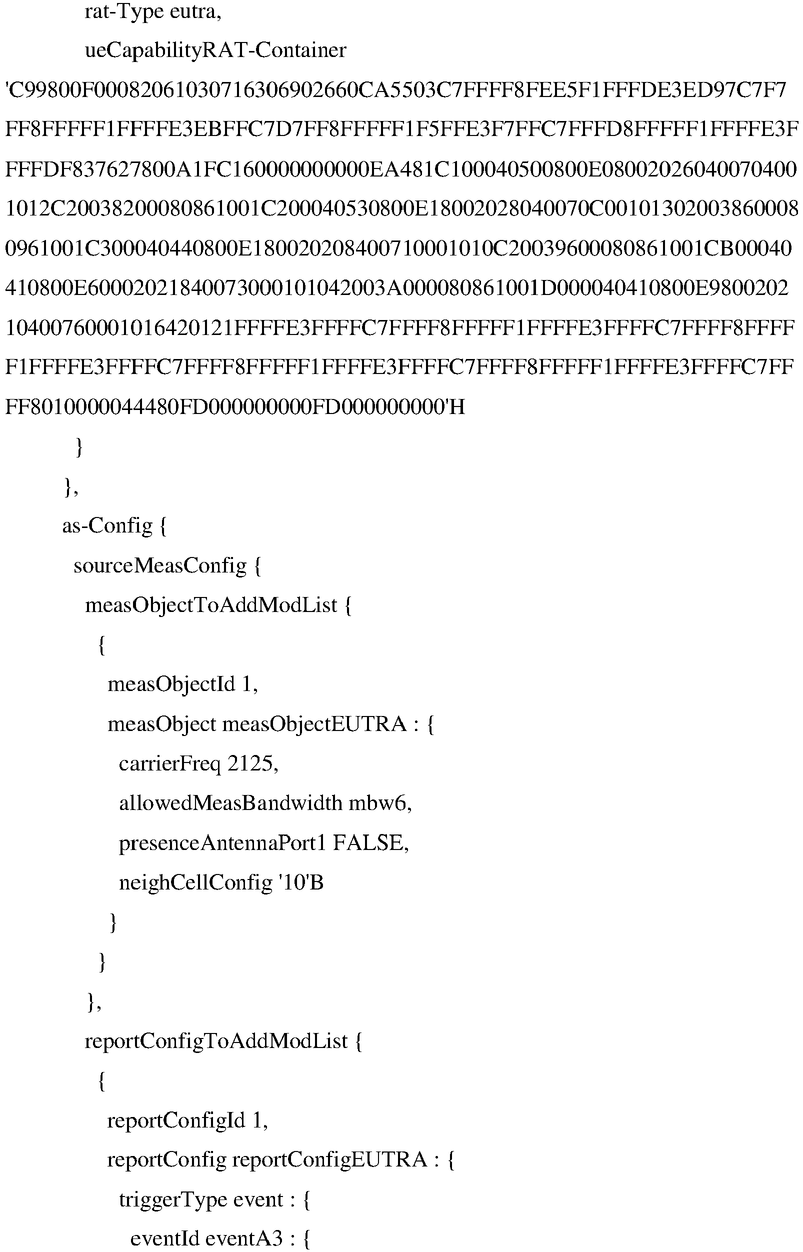

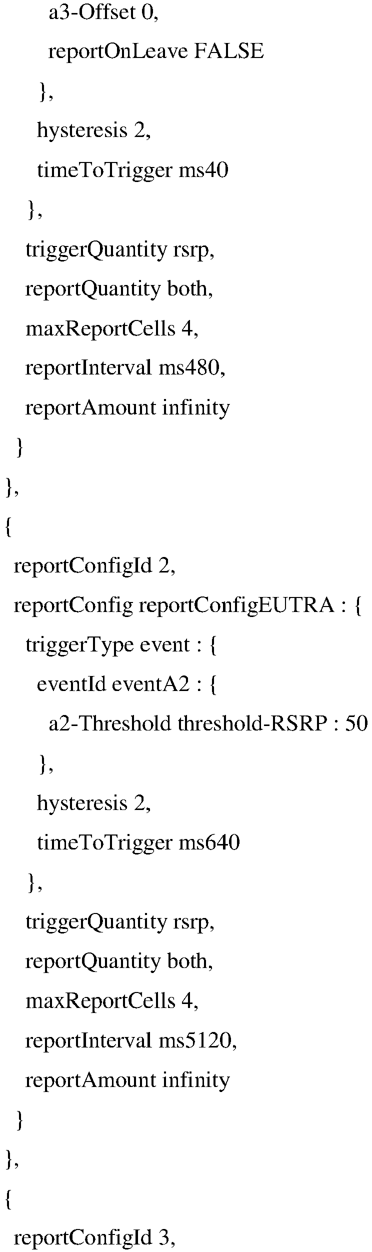

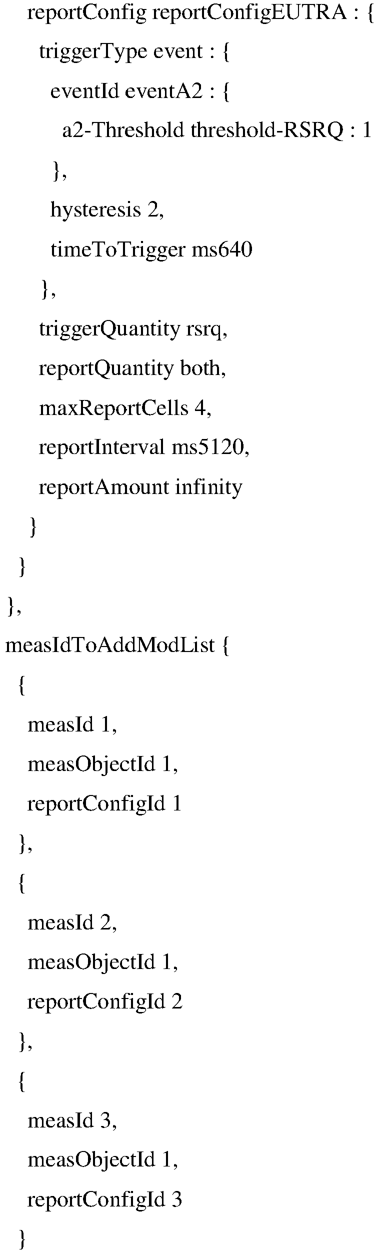

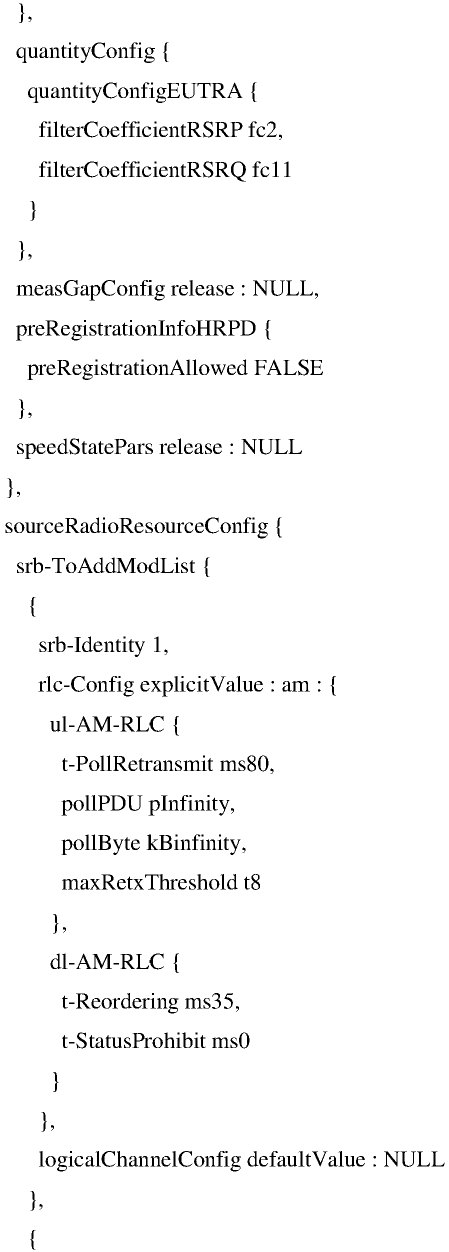

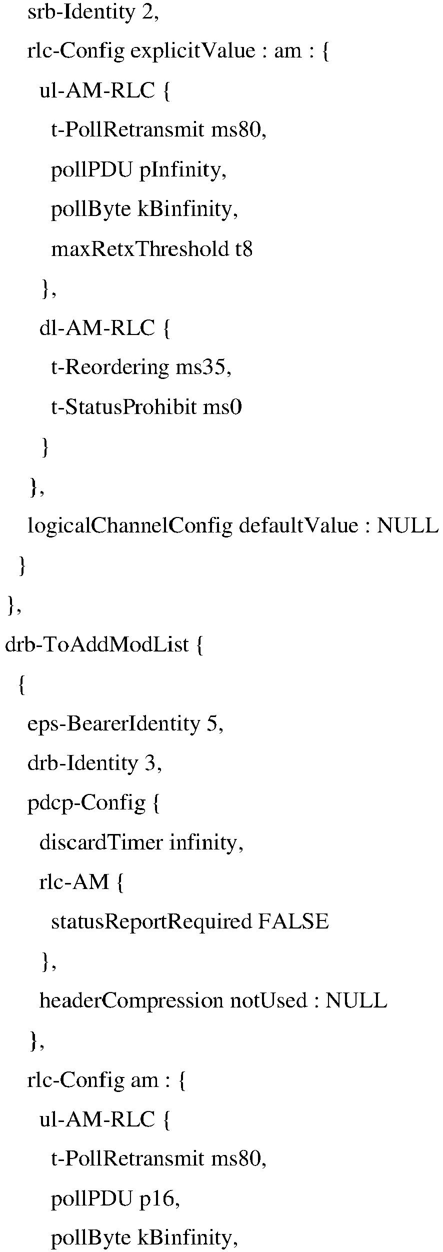

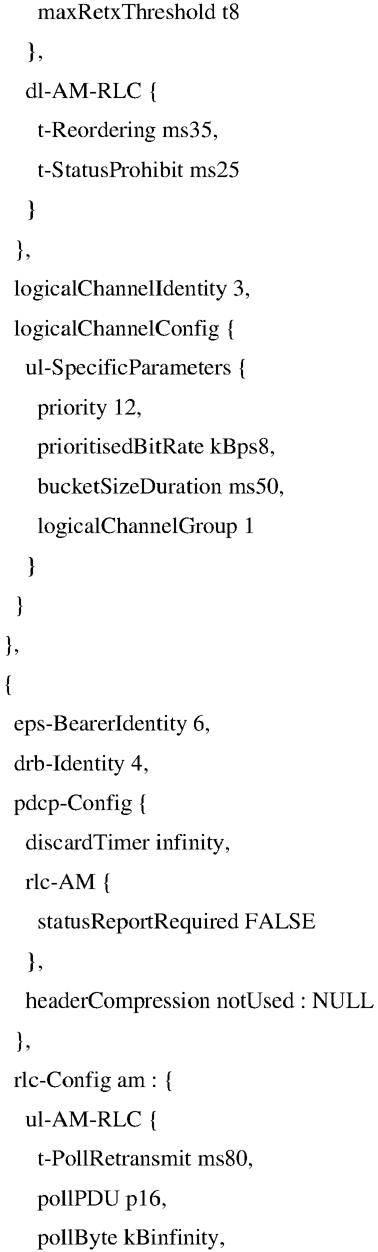

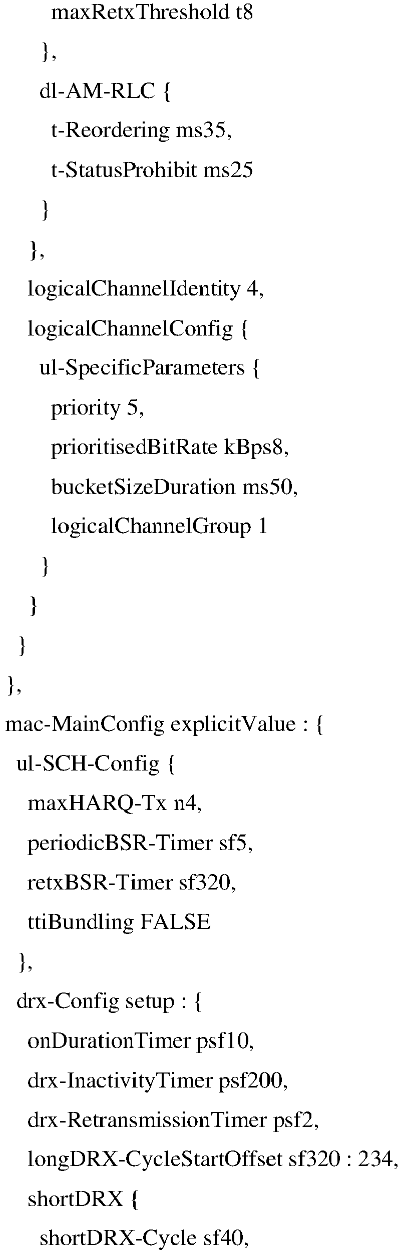

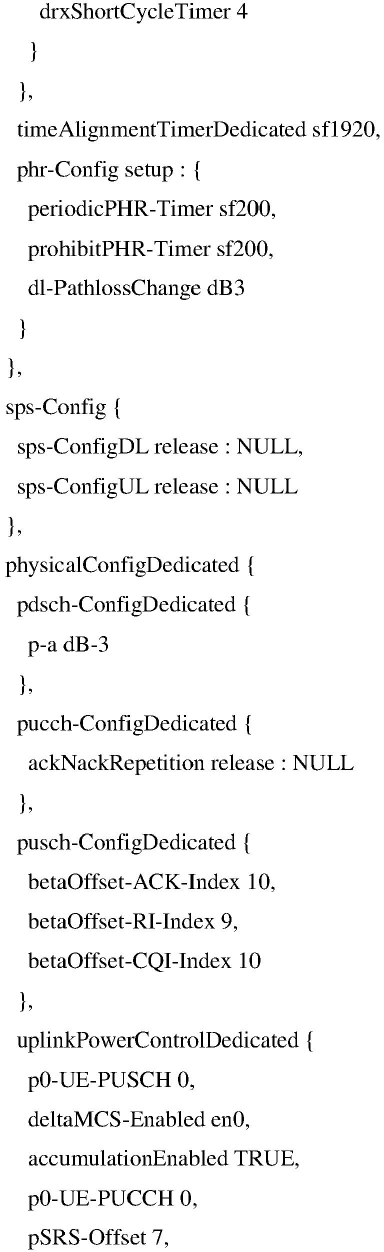

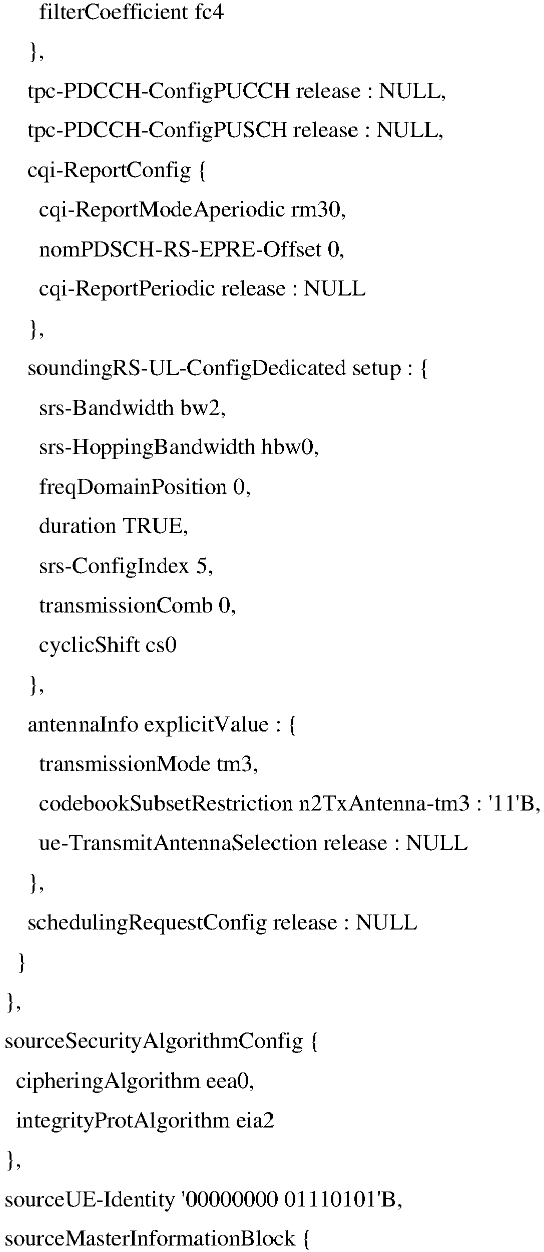

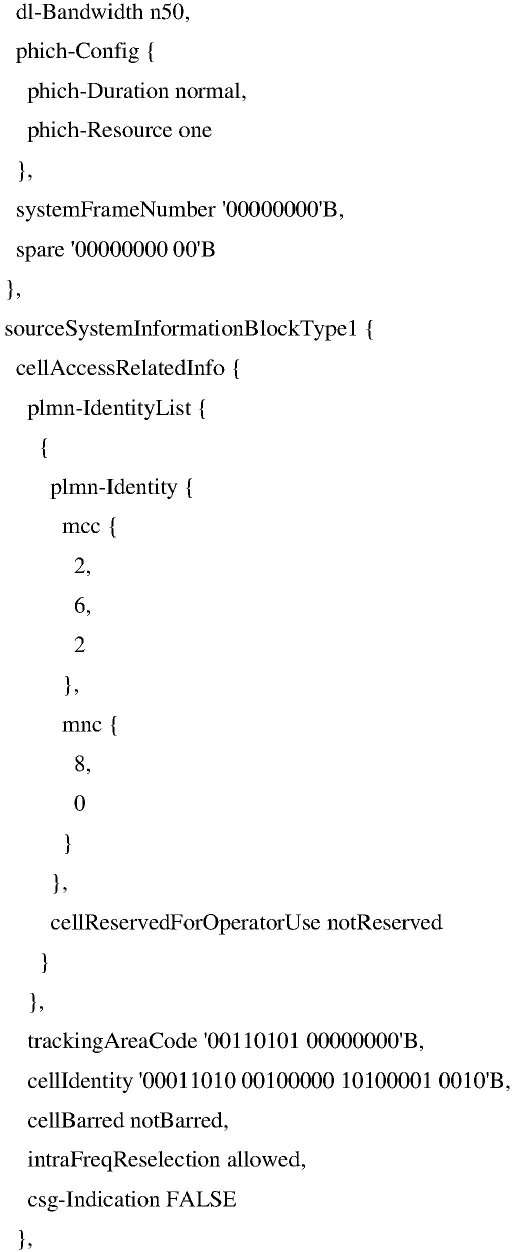

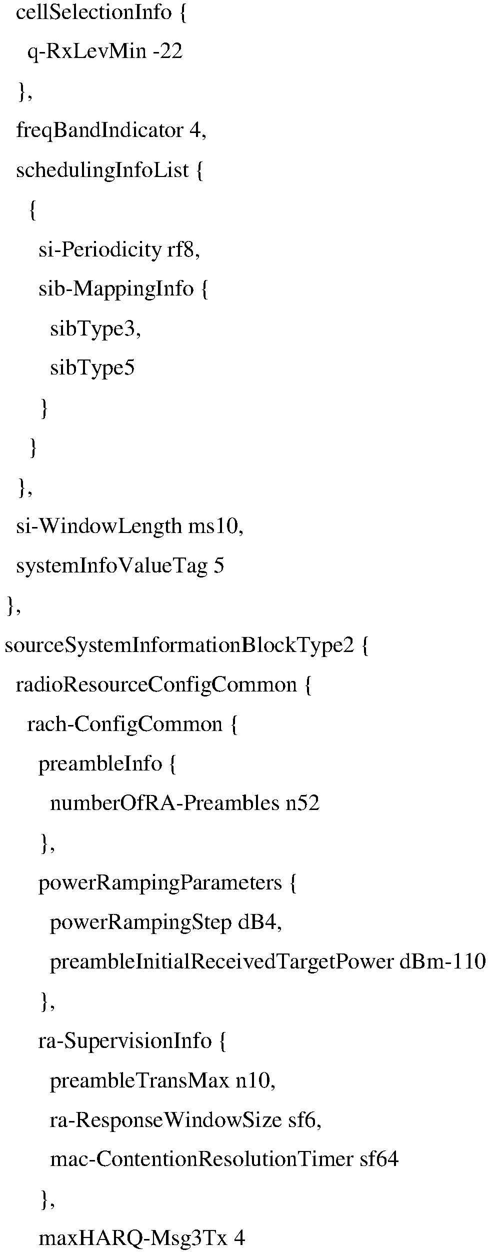

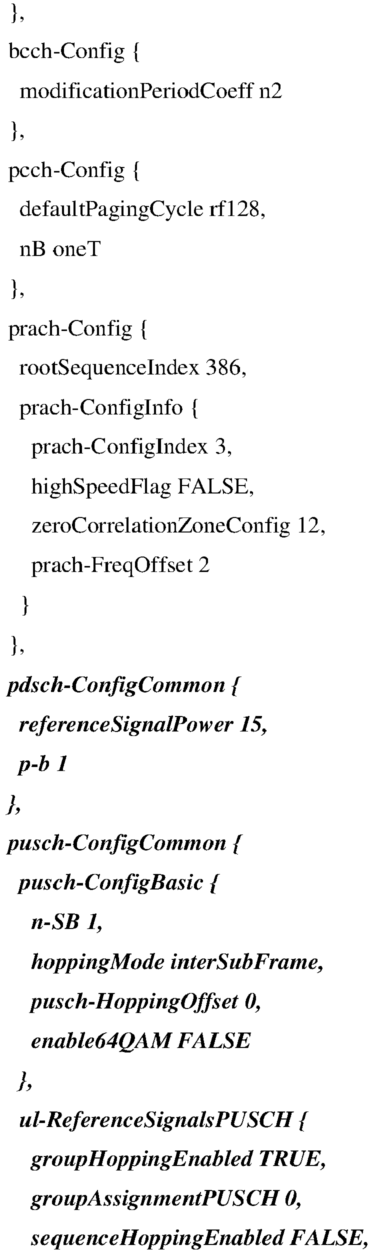

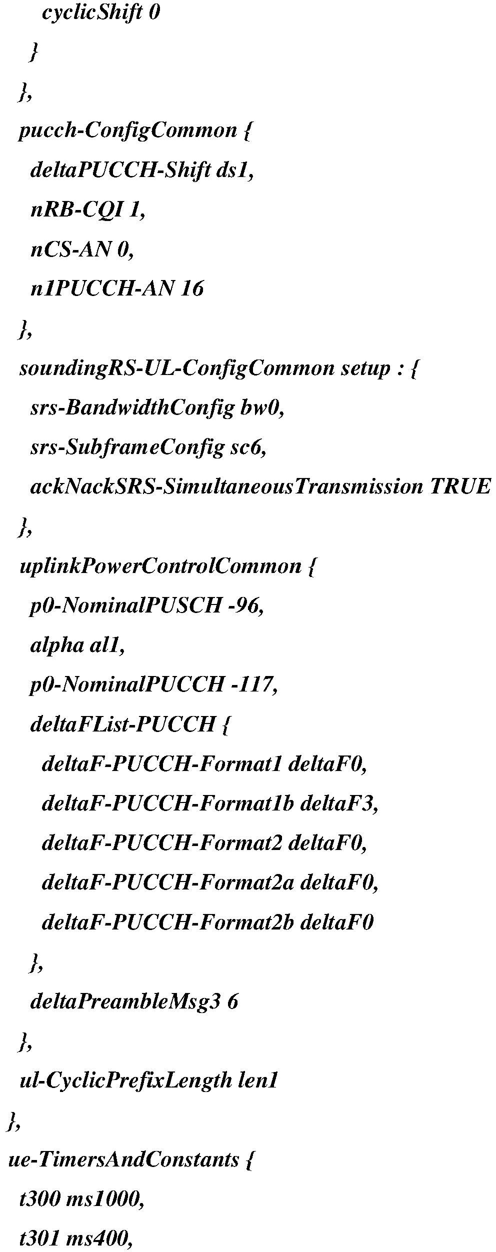

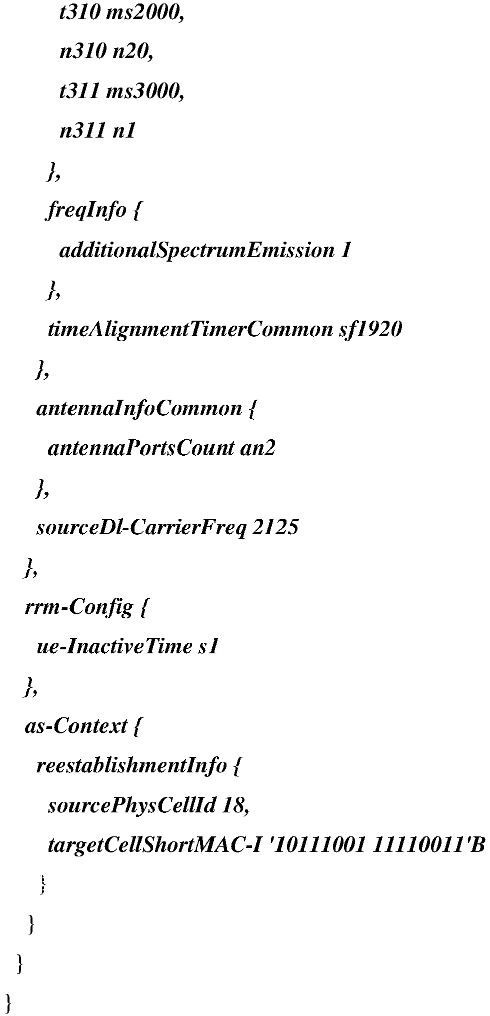

The first configuration information in the first handover command message may include at least Radio Resource Configuration Common parameters such as random access configuration common parameters, physical downlink shared channel configuration common parameters, physical uplink shared channel configuration common parameters, physical uplink control channel configuration common parameter, sounding reference uplink configuration common parameters, uplink power control configuration common parameters and/or antenna information configuration common parameters. The second configuration information included in the second handover command message may include at least radio Resource Configuration dedicated parameters such as random access configuration UE specific parameters, physical downlink shared channel configuration UE specific parameters, physical Hybrid-ARQ indicator channel UE specific parameters, physical uplink shared channel configuration UE specific parameters, physical uplink control channel configuration UE specific parameter, sounding reference uplink configuration UE specific parameters, uplink power control configuration UE specific parameters and/or antenna information configuration UE specific parameters. The UE specific parameters of the Handover Command message may correspond to configuration information received from target node 14a in the Handover Preparation Request Acknowledgement message.

An exemplary target handover process is described with reference to FIG. 6. Processor 36 determines whether a Handover Preparation Request message has been received from source node 12 (Block S150). If processor 36 determines a Handover Preparation Request message has not been received, processor 36 performs the determination of Block S150. If processor 36 determines a Handover Preparation Request message has been received, processor 36 performs handover analysis (Block S152). Processor 36 determines whether to accept the handover of UE 16 based at least in part on the handover analysis (Block S154). If processor 36 determines not to accept the handover, processor 36 causes a Handover Rejection message to be transmitted to source node 12 (Block S150). The Handover Rejection message indicates target node 14a did not accept hand off of UE 16. After the Handover Rejection message has been transmitted, processor 36 performs the determination Block S150.

If processor 36 determines to accept handover of UE 16 based at least in part on the handover analysis, processor 36 causes transmission of a Handover Preparation Request Acknowledgement message to source node 12 that includes the remaining IEs needed for UE configuration (Block S158). Processor 36 determines a Random Access Channel (RACH) message has been received from UE 16, i.e., UE 16 is synchronizing and accessing target node 14a. Processor 36 causes transmission of uplink (UL) allocation and timing advance (TA) to UE 16. Processor 36 determines an RRC Connection Reconfiguration Complete message has been received from UE 16 (Block S164). The RRC Connection Reconfiguration Complete message indicates that the handover procedure is completed for UE 16. In one embodiment, UE 16 can attach full configuration information with the RRC Connection Reconfiguration Complete message such that target node 14a can verify UE 16 configuration. Since UE 16 is already in target node 14a, the radio condition should be gradually improving such that transmission of the full configuration information to/from UE 16 should not be problematic, i.e., the likelihood of target node 14a receiving the full configuration from UE 16 is high.

Processor 36 verifies UE 16 configuration based at least in part on full configuration information attached to the RRC Connection Reconfiguration Complete message (Block S166). Processor 36 determines whether to UE 16 needs to be reconfigured based on received full configuration from UE 16. If UE 16 needs to be reconfigured, processor 36 causes transmission of the update (Block S168). Blocks S166 and S168 may be skipped if UE 16 does not attach full configuration information with the RRC Connect Reconfiguration Complete message.

An exemplary table process for storing configuration information of neighbor nodes 14 is described with reference to FIG. 7. Processor 22 is configured to cause configuration information of at least one neighbor node 14 to be received by receiver 20, i.e., the at least one receiver is further configured to receive neighbor configuration information from target node 14a before the transmission of the first handover command message to UE 16 (Block S170). Processor 22 is configured to determine at least one difference in configuration between source node 12 and at least one neighbor node 14 based at least in part on the received neighbor configuration information (Block S172). Processor 22 is configured to cause the identified at least one difference to be stored in memory 24, i.e., NRT 28 (Block S174). The first configuration information being based at least in part on the determined at least one difference stored in NRT 28. An alternative table process is described with reference to FIG. 8. Processor 22 is configured to cause configuration information of at least one neighbor node 14 to be received at receiver 20, i.e., the at least one receiver is further configured to receive neighbor configuration information from target node 14a before the transmission of the first handover command message to UE 16 (Block S176). Processor 22 is configured to determine the full configuration information of target node 14a based at least in part on the received neighbor configuration information (Block S178). Processor 22 is configured to cause the determined configuration information to be stored in memory 24, i.e., NRT 28 (Block S180). In other words, memory 24 stores NRT 28 that is configured to store the determined full configuration information of target node 14a. The first configuration information is based at least in part on the full configuration information of target node 14a.

The present invention can be realized in hardware, software, or a combination of hardware and software. Any kind of computing system, or other apparatus adapted for carrying out the methods described herein, is suited to perform the functions described herein.

A typical combination of hardware and software could be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings, which is limited only by the following claims.

## Claims

1. A source node for communication with a user equipment, UE, the source node (12) comprising:
at least one processor configured to cause transmission, by one or more transmitters (18) included in the source node (12), of a first handover command message to the UE, the first handover command message including first configuration information for handover to a target node;
at least one receiver configured to receive second configuration information from the target node after transmission of the first handover command message to the UE; and
the at least one processor being further configured to cause transmission, by one or more transmitters (18) included in the source node (12), of a second handover command message to the UE, the second handover command message including the second configuration information received from the target node, the first configuration information configured to be used in combination with the second configuration information to allow the UE to access the target node for handover, and wherein
the first configuration information includes a first quantity of handover related parameters and the second configuration information includes a second quantity of handover related parameters,
the first quantity of handover related parameters are greater than the second quantity of handover related parameters, and
a data size of the first configuration information is larger than a data size of the second configuration information.

2. The source node of Claim 1, wherein the at least one receiver is further configured to receive a measurement report associated with the UE, the measurement report indicating the target node for handover.

3. A method, by a source node, comprising:
causing transmission, by one or more transmitters (18) included in the source node (12), of a first handover command message to a user equipment, UE, the first handover command message including first configuration information for handover to a target node;
receiving second configuration information from the target node after transmission of the first handover command message to the UE; and
causing transmission, by one or more transmitters (18) included in the source node (12), of a second handover command message to the UE, the second handover command message including at least the second configuration information received from the target node, the first configuration information configured to be used in combination with the second configuration information to allow the UE to access the target node for handover,
and wherein
the first configuration information includes a first quantity of handover related parameters and the second configuration information includes a second quantity of handover related parameters,
the first quantity of handover related parameters are greater than the second quantity of handover related parameters, and
a data size of the first configuration information is larger than a data size of the second configuration information.

4. The method of Claim 3, further comprising receiving a measurement report associated with the UE, the measurement report indicating the target node for handover.

## Patentansprüche

1. Quellknoten zur Kommunikation mit einer Benutzereinrichtung, UE, wobei der Quellknoten (12) umfasst:
mindestens einen Prozessor, der dazu konfiguriert ist, durch einen oder mehrere Sender (18), die in dem Quellknoten (12) enthalten sind, die Übertragung einer ersten Handover-Befehlsnachricht an die UE zu bewirken, wobei die erste Handover-Befehlsnachricht erste Konfigurationsinformationen für den Handover an einen Zielknoten enthält;
mindestens einen Empfänger, der dazu konfiguriert ist, zweite Konfigurationsinformationen von dem Zielknoten nach der Übertragung der ersten Handover-Befehlsnachricht an die UE zu empfangen; und
wobei der mindestens eine Prozessor ferner dazu konfiguriert ist, durch einen oder mehrere Sender (18), die in dem Quellknoten (12) enthalten sind, das Übertragen einer zweiten Handover-Befehlsnachricht an die UE zu bewirken, wobei die zweite Handover-Befehlsnachricht die von dem Zielknoten empfangenen zweiten Konfigurationsinformationen einschließt, wobei die ersten Konfigurationsinformationen dazu konfiguriert sind, in Kombination mit den zweiten Konfigurationsinformationen verwendet zu werden, um es der UE zu ermöglichen, auf den Zielknoten für den Handover zuzugreifen, und wobei
die ersten Konfigurationsinformationen eine erste Menge von auf den Handover bezogenen Parametern einschließen und die zweiten Konfigurationsinformationen eine zweite Menge von auf den Handover bezogenen Parametern einschließen,
wobei die erste Menge der auf den Handover bezogenen Parameter größer ist als die zweite Menge der auf den Handover bezogenen Parameter, und
eine Datengröße der ersten Konfigurationsinformationen größer ist als eine Datengröße der zweiten Konfigurationsinformationen.

2. Quellknoten nach Anspruch 1, wobei der mindestens eine Empfänger ferner dazu konfiguriert ist, einen der UE zugeordneten Messbericht zu empfangen, wobei der Messbericht den Zielknoten für den Handover angibt.

3. Verfahren, durch einen Netzknoten, umfassend:
Bewirken der Übertragung, durch einen oder mehrere Sender (18), die in dem Quellknoten (12) enthalten sind, einer ersten Handover-Befehlsnachricht an eine Benutzereinrichtung UE, wobei die erste Handover-Befehlsnachricht erste Konfigurationsinformationen für den Handover an einen Zielknoten enthält;
Empfangen von zweiten Konfigurationsinformationen von dem Zielknoten nach der Übertragung der ersten Handover-Befehlsnachricht an die UE; und
Bewirken der Übertragung, durch einen oder mehrere Sender (18), die in dem Quellknoten (12) enthalten sind, einer zweiten Handover-Befehlsnachricht an die UE, wobei die zweite Handover-Befehlsnachricht die von dem Zielknoten empfangenen zweiten Konfigurationsinformationen einschließt, wobei die ersten Konfigurationsinformationen dazu konfiguriert sind, in Kombination mit den zweiten Konfigurationsinformationen verwendet zu werden, um es der UE zu ermöglichen, auf den Zielknoten für den Handover zuzugreifen, und wobei
die ersten Konfigurationsinformationen eine erste Menge von auf den Handover bezogenen Parametern einschließen und die zweiten Konfigurationsinformationen eine zweite Menge von auf den Handover bezogenen Parametern einschließen,
wobei die erste Menge der auf den Handover bezogenen Parameter größer ist als die zweite Menge der auf den Handover bezogenen Parameter, und
eine Datengröße der ersten Konfigurationsinformationen größer ist als eine Datengröße der zweiten Konfigurationsinformationen.

4. Verfahren nach Anspruch 3, ferner umfassend das Empfangen eines der UE zugeordneten Messberichts, wobei der Messbericht den Zielknoten für den Handover angibt.

## Revendications

1. Noeud source pour une communication avec un équipement utilisateur, UE, le noeud source (12) comprenant :
au moins un processeur configuré pour amener une transmission, par un ou plusieurs émetteurs (18) inclus dans le noeud source (12), d'un premier message d'instruction de transfert à l'UE, le premier message d'instruction de transfert incluant des premières informations de configuration pour transfert vers un noeud cible ;
au moins un récepteur configuré pour recevoir des deuxièmes informations de configuration depuis le noeud cible après transmission du premier message d'instruction de transfert à l'UE ; et
l'au moins un processeur étant configuré en outre pour amener la transmission, par un ou plusieurs émetteurs (18) inclus dans le noeud source (12), d'un deuxième message d'instruction de transfert à l'UE, le deuxième message d'instruction de transfert incluant les deuxièmes informations de configuration reçues du noeud cible, les premières informations de configuration configurées pour être utilisées en combinaison avec les deuxièmes informations de configuration pour permettre à l'UE d'accéder au noeud cible pour transfert, et dans lequel les premières informations de configuration incluent une première quantité de paramètres associés au transfert et les deuxièmes informations de configuration incluent une deuxième quantité de paramètres associés au transfert,
la première quantité de paramètres associés au transfert est supérieure à la deuxième quantité de paramètres associés au transfert, et
une taille de données des premières informations de configuration est supérieure à une taille de données des deuxièmes informations de configuration.

2. Noeud source selon la revendication 1, dans lequel l'au moins un récepteur est en outre configuré pour recevoir un rapport de mesure associé à l'UE, le rapport de mesure indiquant le noeud cible pour transfert.

3. Procédé, par un noeud source, comprenant :
le fait d'amener une transmission, par un ou plusieurs émetteurs (18) inclus dans le noeud source (12), d'un premier message d'instruction de transfert à un équipement utilisateur, UE, le premier message d'instruction de transfert incluant des premières informations de configuration pour transfert vers un noeud cible ;
la réception de deuxièmes informations de configuration depuis le noeud cible après transmission du premier message d'instruction de transfert à l'UE ; et
le faite d'amener une transmission, par un ou plusieurs émetteurs (18) inclus dans le noeud source (12), d'un deuxième message d'instruction de transfert à l'UE, le deuxième message d'instruction de transfert incluant au moins les deuxièmes informations de configuration reçues du noeud cible, les premières informations de configuration configurées pour être utilisées en combinaison avec les deuxièmes informations de configuration pour permettre à l'UE d'accéder au noeud cible pour transfert, et dans lequel
les premières informations de configuration incluent une première quantité de paramètres associés au transfert et les deuxièmes informations de configuration incluent une deuxième quantité de paramètres associés au transfert,
la première quantité de paramètres associés au transfert est supérieure à la deuxième quantité de paramètres associés au transfert, et
une taille de données des premières informations de configuration est supérieure à une taille de données des deuxièmes informations de configuration.

4. Procédé selon la revendication 3, comprenant en outre la réception d'un rapport de mesure associé à l'UE, le rapport de mesure indiquant le noeud cible pour transfert.
